# FASCICULE DE BREVET EUROPEEN

(11) **EP 3 811 573 B1**
(45) Date de publication et mention de la délivrance du brevet: **13.04.2022**
(21) Numéro de dépôt: 19742449.2
(22) Date de dépôt: 17.06.2019
(51) Int. Cl.: H04L 12/28, H04L 12/24

(54) **PROCÉDÉ DE CONFIGURATION D'UNE UNITÉ CENTRALE DE COMMANDE APPARTENANT À UNE INSTALLATION DOMOTIQUE**
VERFAHREN ZUR KONFIGURATION EINER ZENTRALEN STEUEREINHEIT EINES HEIMAUTOMATISIERUNGSSYSTEMS
METHOD FOR CONFIGURING A CENTRAL CONTROL UNIT BELONGING TO A HOME AUTOMATION SYSTEM

(30) Priorité: 20.06.2018 FR 1855414
(43) Date de publication de la demande: 28.04.2021
(73) Titulaire: Overkiz, 74370 Metz-Tessi (FR)
(72) Inventeur: POGNANT, Sylvain, 74600 SEYNOD (FR)
(74) Mandataire: Germain Maureau
(86) Numéro de dépôt international: PCT/FR2019/051466
(87) Numéro de publication internationale: WO 2019/243722

(56) Documents cités:
- EP-A1- 2 843 879
- FR-A1- 3 047 374
- US-A1- 2017 048 079
- US-A1- 2017 060 574

## Description

### Domaine de l'invention

La présente invention concerne un procédé de configuration d'un terminal de communication pour le contrôle d'une unité centrale de commande ou d'un dispositif domotique appartenant à une installation domotique.

### Art antérieur

Une installation domotique d'un bâtiment peut comprendre un ou plusieurs dispositifs domotiques. Il est connu de procéder au contrôle, c'est à dire à la commande et/ou à la supervision de ladite installation en utilisant au moins une unité centrale de commande qui communique avec un ou plusieurs dispositifs domotiques. Une telle unité centrale de commande peut être intégrée à un dispositif domotique ou indépendante.

Une unité centrale de commande doit être configurée pour permettre son interaction avec le ou les dispositifs domotiques ou des services fonctionnels à distance, comme par exemple un service utilisateur.

Un grand nombre de configurations différentes peuvent être envisagées pour une même unité centrale de commande, ce qui implique de mettre en œuvre un procédé de configuration adapté notamment en fonction des dispositifs ou des services à connecter, ou de procéder à une configuration in situ lors de la mise en place de l'unité centrale de commande dans l'installation domotique, cette configuration pouvant se révéler complexe.

Le contrôle de l'unité centrale ou de l'installation domotique peut être réalisée par l'intermédiaire d'un terminal de communication. Toutefois, la configuration du terminal de communication doit être adaptée à la version du système d'exploitation ou logiciel fonctionnel de l'unité centrale de commande, afin de permettre une communication entre le terminal de communication et l'unité centrale de commande. Or, la version dudit système d'exploitation ou logiciel fonctionnel de l'unité centrale est inconnue du terminal de communication. De même, la configuration du terminal de communication est susceptible d'évoluer, par exemple, pour en améliorer les fonctions ou procéder à diverses corrections fonctionnelles. Il est donc nécessaire de configurer le terminal de communication afin d'adapter sa configuration à la version du système d'exploitation installé dans l'unité centrale de commande.

La présente invention a pour but de résoudre tout ou partie des problèmes mentionnés ci-dessus.

FR 3047374A1 divulgue un procédé destiné à être utilisé dans un réseau domestique avec des dispositifs communiquant localement avec une unité centrale du réseau domestique utilisant un premier protocole, le procédé implanté dans l'unité centrale pour permettre au premier protocole d'être converti en un second protocole comprenant la réception par l'unité centrale d'au moins un message de configuration selon le premier protocole indiquant l'adresse, le type, la fonction et l'état des dispositifs, la réception de l'adresse des dispositifs selon le second protocole, l'enregistrement de la correspondance d'adresse des dispositifs entre le premier et le second protocole, l'enregistrement et l'établissement de règles de conversion pour les fonctions et pour l'état du dispositif entre le premier et le second protocole.

EP 2843879A1 divulgue un procédé de configuration d'une installation domotique faite d'un ensemble d'équipements reliés en un réseau domotique, comprenant une étape de paramétrage dudit réseau. Ce procédé comprend - une étape de premier échange d'informations entre l'installation domotique et une première base de données située dans un réseau extérieur, ainsi que - une étape de deuxième échange d'informations entre la première base et une deuxième base de données constructeur, située dans le réseau extérieur.

US 2017/048079 A1 divulgue un procédé consistant à recevoir des données d'autres dispositifs dans un réseau par l'intermédiaire d'adaptateurs de protocole au niveau d'un dispositif dans le réseau. Les données reçues sont transformées en un modèle de données commun par le dispositif. Une application conteneurisée est exécutée par le dispositif. Les données transformées sont exposées à l'application par le dispositif, où les autres dispositifs comprennent des capteurs et les données reçues comprennent des données de capteur. Un paquet d'installation qui comprend l'application est reçu par le dispositif. Une instance de conteneur est générée en réponse à la réception du paquet d'installation.

### Exposé de l'invention

A cet effet, la présente invention un procédé de configuration d'un terminal de communication pour le contrôle d'une unité centrale de commande ou d'un dispositif domotique appartenant à une installation domotique, le procédé étant mis en œuvre par le terminal de communication, une configuration initiale du terminal de communication comprenant au moins une application conteneur, le procédé, mis en œuvre par le terminal de communication, comprenant les étapes suivantes:
- réception d'une application d'interface et/ou de données de paramétrage de ladite application d'interface, téléchargés depuis l'unité centrale de commande ou depuis une unité de stockage externe;
- adaptation de la configuration du terminal de communication, l'étape d'adaptation comprenant une installation de l'application d'interface téléchargée sur le terminal de communication et/ou un paramétrage d'une application d'interface, présente sur le terminal de communication avant l'étape de réception, afin de rendre l'application d'interface compatible avec une version prédéterminée d'un logiciel fonctionnel de l'unité centrale de commande.

Grâce à ces dispositions, si la version du logiciel fonctionnel et/ou le paramétrage de l'application d'interface de l'unité centrale de commande évoluent indépendamment de la configuration du terminal de communication, la configuration du terminal de communication pourra toujours être mise à jour pour être rendue compatible de la version en vigueur.

Selon un mode de mise en oeuvre, l'invention comprend une ou plusieurs des caractéristiques suivantes, seules ou en combinaison.

Selon un mode de mise en oeuvre, le procédé comprend en outre l'étape suivante :
- émission d'une requête de téléchargement de l'application d'interface;

Selon un mode de mise en oeuvre, le procédé comprend en outre les étapes suivantes :
- émission d'un message de découverte;
- réception d'un message d'identification contenant l'adresse de téléchargement d'une application d'interface;

Selon un mode de mise en oeuvre :
- l'étape d'émission du message de découverte, et
- l'étape de réception du message d'identification,
sont réalisées selon un premier protocole de communication, et l'étape de réception de l'application d'interface est réalisée selon un deuxième protocole de communication.

Grâce à ces dispositions, le premier protocole de communication peut être un protocole très simple adapté à la découverte de l'unité centrale de commande, c'est-à-dire à une communication entre le terminal émetteur et des unités électroniques dans la portée électromagnétique de l'émetteur, sans destinataire prédéterminé du message émis. Le deuxième protocole de communication peut être un protocole de communication adapté au téléchargement de données et configuré pour communiquer selon un mode point à point.

Selon un mode de mise en oeuvre, l'étape d'émission de la requête de téléchargement est réalisée selon un deuxième protocole de communication.

Selon un mode de mise en oeuvre, l'invention concerne également un procédé de contrôle d'une unité centrale de commande ou d'un dispositif domotique appartenant à une installation domotique mis en œuvre par un terminal de communication, une configuration initiale du terminal de communication comprenant au moins une application conteneur, l'unité centrale de commande comprenant une version prédéterminée d'un logiciel fonctionnel et au moins un module de communication agencé pour communiquer avec l'application conteneur, le procédé comprenant les étapes suivantes :
- mise en œuvre du procédé de configuration selon l'une des revendications précédentes ;
- envoi d'un message de contrôle à l'unité centrale de commande par l'intermédiaire de l'application d'interface installée et/ou paramétrée, lors d'une étape d'adaptation du procédé de configuration.

Grâce à ces dispositions, si la version du logiciel fonctionnel et/ou le paramétrage de l'application d'interface de l'unité centrale de commande évoluent, indépendamment de la configuration du terminal de communication, la configuration du terminal de communication pourra toujours être mise à jour pour être rendue compatible de la version en vigueur, et permettre au terminal de communication de reprendre le contrôle de l'unité centrale de commande.

Grâce à ces dispositions, la configuration du terminal de communication s'adapte à la version prédéterminée du logiciel fonctionnel et/ou le paramétrage de l'application d'interface de l'unité centrale de commande avant le contrôle de l'unité centrale de commande et/ou d'au moins un dispositif domotique de l'installation domotique.

Selon un mode de mise en oeuvre, l'invention concerne également un procédé de configuration d'un terminal de communication pour le contrôle d'une unité centrale de commande ou d'un dispositif domotique appartenant à une installation domotique, une configuration initiale du terminal de communication comprenant au moins une application conteneur, le procédé étant mis en œuvre par l'unité centrale de commande, l'unité centrale de commande comprenant au moins un module de communication agencé pour communiquer avec l'application conteneur, ainsi qu'un logiciel fonctionnel et une application d'interface pour ledit logiciel fonctionnel, le procédé, mis en œuvre par l'unité centrale de commande, comprenant l'étape suivante:
- téléchargement, via le module de communication, de l'application d'interface et/ou de données de paramétrage de ladite application d'interface sur le terminal de communication.

Selon un mode de mise en oeuvre, le procédé de configuration comprend une étape de :
- réception, via le module de communication, d'une requête de téléchargement, émise par le terminal de communication.

Selon un mode de mise en oeuvre, le procédé de configuration comprend les étapes suivantes :
- réception d'un message de découverte en provenance du terminal de communication;
- émission d'un message d'identification contenant l'adresse de téléchargement d'une application d'interface, destiné au terminal de communication;

Selon un mode de mise en oeuvre, l'étape de réception du message de découverte, et l'étape d'émission du message d'identification, sont réalisées selon un premier protocole de communication, et l'étape de téléchargement de l'application d'interface est réalisée selon un deuxième protocole de communication.

Selon un mode de mise en oeuvre, l'étape de réception de la requête de téléchargement est réalisée selon un deuxième protocole de communication.

Le terminal de communication peut être un terminal de communication mobile, par exemple, un téléphone intelligent, un ordinateur portable ou une tablette. Alternativement, l'utilisateur final pourrait également faire usage d'un terminal fixe comme un ordinateur fixe.

Au sens de la présente invention, la configuration d'un terminal de communication est déterminée par la ou les applications qui sont installées sur ledit terminal et qui lui permettent de communiquer, que ce soit localement ou via un réseau étendu, selon un ou plusieurs protocoles de communication, avec une ou plusieurs unités centrales de commandes, et/ou le paramétrage des applications installées sur ledit terminal.

La configuration minimale d'un terminal de communication comprend un module logiciel de découverte, également appelée application conteneur, qui permet au terminal de communiquer, au moins dans un mode de découverte et selon un premier protocole, avec la ou les unités centrales qui se trouvent à proximité. Ce premier protocole peut être, par exemple un protocole WIFI adhoc, Bluetooth, ou BLE, de communication directe entre une unité centrale et le terminal. L'application conteneur est un élément constitutif de la configuration de base du terminal de communication. Les adaptations de la configuration du terminal de communication, telles que mises en œuvre par le procédé de configuration, viennent compléter la configuration de base en ajoutant de de nouvelles applications d'interface et/ou en modifiant le paramétrage d'applications d'interface existantes, sans modifier les fonctions de l'application conteneur.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, une installation domotique est un ensemble comprenant au moins un dispositif domotique et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs domotiques forment des groupes d'au moins un dispositif domotique rattaché à une unité centrale de commande.

Au sens de la présente invention, une unité centrale de commande de l'installation domotique est une unité électronique comprenant :
- au moins une unité de traitement agencée pour contenir et exécuter au moins un programme d'ordinateur,
- au moins un module de communication destinée au contrôle et/ou à la commande d'au moins un dispositif domotique ;
- au moins un module de communication agencé pour communiquer avec l'unité de gestion ;et/ou
- au moins un module de communication agencé pour communiquer avec le module logiciel de découverte, ou application conteneur d'un terminal de communication.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API (pour *^{«}Application Program Interface »* selon la terminologie anglo-saxonne).

Il est également possible que l'unité centrale de commande soit intégrée à un routeur et/ou à un modem réalisant une connexion à un réseau étendu, notamment à Internet.

Au sens de la présente invention les fonctions d'une unité centrale de commande sont assurées par un système d'exploitation ou logiciel fonctionnel qui s'exécute sur l'au moins une unité de traitement de l'unité centrale de commande. Dans la suite on utilisera principalement la désignation de logiciel fonctionnel. Le logiciel fonctionnel d'une unité centrale de commande est susceptible d'évoluer fréquemment, pour en améliorer les fonctions ou procéder à diverses corrections fonctionnelles. Chaque évolution dudit logiciel fonctionnel donne naissance à une nouvelle version de ce logiciel.

Par utilisateur, il peut être compris un utilisateur final, un installateur ou encore un opérateur de maintenance.

Selon un aspect de l'invention, l'unité de gestion exécutant le service à distance est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, la ou les unités de gestion exécutant le premier service de configuration peut être une unité centrale destinée à être reliée à une ou plusieurs unités centrales de commande sur des réseaux privés, également appelés réseaux locaux distincts, ou encore sur le même réseau local.

La supervision correspond de façon générale à une supervision basée sur le traitement de valeurs des variables d'état d'au moins un dispositif domotique ou une unité centrale de commande.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande correspond à un ordre pouvant être donné à un dispositif domotique ou à une unité centrale de commande en vue de la réalisation d'une action par un dispositif ou de l'obtention en retour d'une information, par exemple d'une information relative à une variable d'état de ce dispositif.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Les différents aspects définis ci-dessus non incompatibles peuvent être combinés.

### Brève description des figures

L'invention sera mieux comprise à l'aide de la description détaillée qui est exposée ci-dessous en regard des dessins annexés sur lesquels :
La figure 1 est une vue schématique d'un bâtiment et d'une installation domotique conforme à un mode de réalisation de l'invention ;
La figure 2 est un schéma présentant une architecture d'un système comprenant une installation domotique avec une unité centrale de commande et un terminal de communication ;
La figure 3 est un schéma illustrant un mode de mise en œuvre d'un procédé de configuration ;
La figure 4 illustre un exemple de mise en œuvre du procédé selon une configuration particulière du terminal de communication utilisé.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

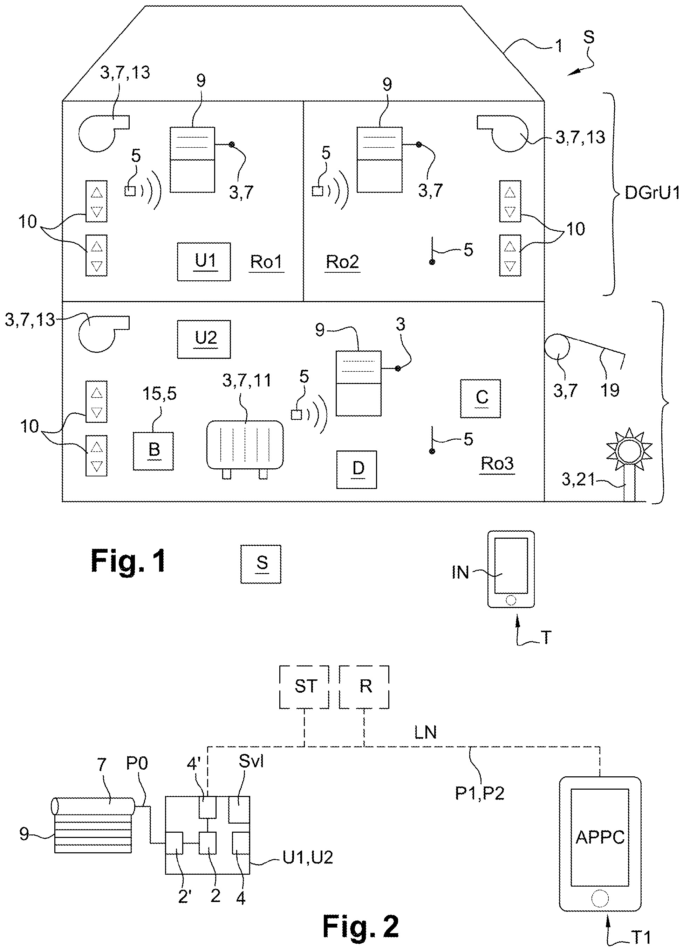

Comme illustré sur la figure 1, un bâtiment 1 comprend à titre d'exemple trois pièces Ro1, Ro2, Ro3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence. L'installation peut encore comprendre un ou plusieurs capteurs de consommation électrique.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce Ro1, Ro2, Ro3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

Les dispositifs domotiques comprennent de façon générale une unité de traitement comprenant un processeur exécutant un logiciel embarqué. Ce logiciel fait l'objet de mises à jour pour en améliorer les fonctions ou procéder à des corrections.

L'installation domotique Su comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces Ro1 et Ro2 du premier étage du bâtiment, alors que l'unité centrale de commande U2 est en charge des dispositifs D disposés dans la pièce Ro3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radiofréquence. Chaque unité centrale de commande U1, U2 est agencée pour regrouper l'ensemble des données en provenance des dispositifs D de son groupe DGrU1, DGrU2 et pour traiter ces données.

Comme cela est représenté sur la figure 2, une unité centrale de commande U1, U2 comprend une unité de traitement 2 agencée pour contenir et exécuter un premier programme d'ordinateur. A titre d'exemple, l'unité de traitement 2 comprend un processeur, une mémoire flash de stockage ainsi qu'une mémoire vive, et une puce Ethernet.

L'unité de traitement est agencée pour exécuter un logiciel embarqué. Ce logiciel fait l'objet de mises à jour pour en améliorer les fonctions ou procéder à des corrections.

L'unité centrale de commande U1, U2 comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et/ou la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon au moins un protocole de communication local P0.

A titre d'exemple, le module de communication 2' peut être agencé pour mettre en œuvre par exemple un ou plusieurs protocoles locaux P0 par exemple de type Z-Wave, EnOcean, IO Homecontrol, Somfy RTS, KNX, MODBUS, Wavenis, Philips HUE. Ces protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

Lorsque l'unité centrale de commande est intégrée à un dispositif domotique, le module de communication 2' destiné au contrôle et/ou à la commande du dispositif peut être un module de communication interne au dispositif domotique et/ou un module de communication destiné au contrôle et/ou à la commande d'autres dispositifs domotiques.

La réception d'informations d'un capteur 5 fournissant des informations de présence d'un utilisateur ou des valeurs des paramètres environnants, comme la température, l'humidité et la luminosité, est également prévue. De la même façon, l'unité centrale U1, U2 peut permettre le contrôle et/ou la commande d'un système d'alarme.

Chaque unité centrale de commande U1, U2, peut comprendre, en outre, un module de communication 4' agencé pour communiquer selon au moins un premier et/ou un deuxième protocole de communication P1, P2 autre que le protocole local P0 précédemment décrit. Les premier et deuxième protocoles de communication P1, P2 de communication peuvent par exemple être des protocoles de communication au-dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un premier et/ou deuxième protocole P1, P2. D'autres exemples incluent Bluetooth, BLE pour Bluetooth Low Energy ou Wifi.

On a représenté sur la figure 2 une architecture particulière d'une installation domotique, dans laquelle l'unité centrale de commande ne peut communiquer que localement, via le module de communication 4', avec un terminal de communication T1. Cette situation peut correspondre par exemple au cas d'une installation domotique installée dans un bâtiment dans lequel un accès internet n'est pas encore disponible. En conséquence, le module de communication 4 n'est pas fonctionnel.

Le terminal de communication mobile T1 peut être, par exemple, un téléphone intelligent, un ordinateur portable ou une tablette. Alternativement, l'utilisateur final pourrait également faire usage d'un terminal fixe, comme un ordinateur fixe. Le terminal de communication T1 peut contenir et exécuter un logiciel d'application conteneur APPC.

Chaque unité centrale de commande U1, U2 comprend en outre un module de communication 4 agencé pour communiquer avec au moins un serveur distant via un réseau étendu, de type internet par exemple. Ce module de communication 4, associé à l'au moins un serveur distant permet la commande et/ou le contrôle à distance d'une unité centrale de commande U1, U2 et/ou d'un dispositif domotique rattaché à l'unité centrale de commande.

Le terminal de communication mobile T1 comprend un dispositif d'entrée de données et un dispositif d'affichage, par exemple sous forme d'une partie de commande tactile d'un écran du terminal T1 et sous forme d'un ou de plusieurs boutons du terminal T1. T1 peut communiquer directement avec l'unité centrale de commande U1, U2, via un réseau local LN, tel que par exemple les réseaux locaux PN ou PN' décrit précédemment, et un serveur local Svl disposé sur l'unité centrale de commande U1, U2 ; T1 peut également communiquer avec l'unité centrale de commande U1, U2 par l'intermédiaire d'un routeur R externe à l'unité centrale de commande U1, U2, comme cela est illustré sur la figure 2.

L'unité centrale de commande est équipée d'un logiciel fonctionnel qui comprend une interface IHM et/ou des paramètres de configuration d'une interface IHM. Ce logiciel fonctionnel est stocké dans une mémoire de l'unité centrale de commande U1, U2, ou dans une unité de stockage ST externe à l'unité centrale de commande U1 à laquelle le terminal de communication T1 peut accéder via le réseau local LN, comme cela est illustré sur la figure 2.

### Procédé de configuration d'un terminal pour le contrôle d'une unité centrale de commande

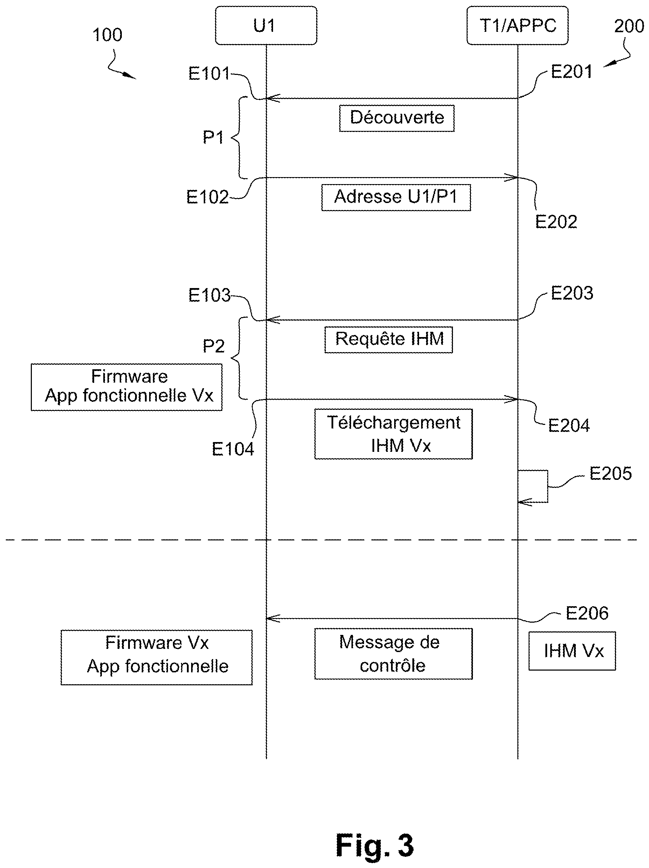

En référence à la figure 3, la description du procédé de configuration va maintenant porter plus particulièrement sur un mode de réalisation de l'invention dans lequel l'unité centrale U1 ne dispose d'aucun accès au réseau étendu, comme cela est représenté à la figure 2. La version Vx du logiciel fonctionnel de l'unité centrale de commande U1 est inconnue du terminal de communication T1, qui communique localement avec l'unité centrale de commande U1. Le terminal de communication T1 doit donc être configuré selon le procédé de l'invention pour pouvoir contrôler ensuite localement l'unité centrale de commande U1.

Comme cela a été indiqué précédemment, le système d'exploitation ou logiciel fonctionnel de l'unité centrale de commande U1 est évolutif, et la version Vx du logiciel fonctionnel, installée dans l'unité centrale de commande U1, est a priori inconnue du terminal de communication T1.

La configuration initiale du terminal T1 comprend au moins une application conteneur APPC, agencée pour assurer au moins les fonctions suivantes :
- la mise en œuvre d'une étape de découverte E201, E101 avec l'émission par le terminal de communication d'un message de découverte E201, selon un premier protocole de communication P1, en mode broadcast par exemple, à destination de la ou des unités centrales de commande U1, U2 qui se trouvent à portée radiofréquence du terminal T1 en communication directe. La réception du message de découverte E101 par le module de communication 4' dédié d'une unité centrale de commande U1 à qui le message de découverte est destiné, déclenche une étape d'identification E102, E202 de l'unité centrale de commande, avec l'émission E102 à destination du terminal de communication T1, par l'unité centrale de commande U1, d'un message contenant l'adresse de téléchargement d'une application d'interface IHM selon la dernière version Vx du logiciel fonctionnel de l'unité centrale de commande U1, et éventuellement l'identifiant d'un deuxième protocole de communication P2, applicable pour requérir le téléchargement, depuis l'unité centrale de commande U1 ou depuis une unité de stockage externe ST, de cette interface IHM et/ou des paramètres de configuration d'une interface existante sur le terminal de communication T1. L'interface IHM, une fois installée ou configurée conformément auxdits paramètres, permet d'assurer un contrôle de l'unité centrale de commande U1 à partir du terminal de communication T1 via cette interface IHM, dans sa version Vx. Selon un aspect de l'invention, le premier protocole de communication P1 et le deuxième protocole de communication P2 peuvent être différents ou identiques ; le premier protocole de communication P1 doit au moins permettre de communiquer en mode « broadcast », i.e. avec des unités électroniques qui se trouvent dans la portée de l'émetteur, sans que l'adresse d'un destinataire particulier soit précisée. Ainsi, le premier protocole de communication P1 peut par exemple être du type UPNP (« Universal Plug and play Network Protocol »). Le deuxième protocole de communication P2 peut être par exemple un protocole de type HTTP.
- la réception E202 par le terminal de communication T1, du message d'identification de l'interface IHM de la version prédéterminée Vx du logiciel fonctionnel de l'unité centrale de commande U1;
- l'émission E203 par le terminal de communication T1 d'une requête à destination de l'unité centrale de commande U1 ou de l'unité de stockage externe ST afin de demander le téléchargement sur le terminal T1, de l'application d'interface IHM selon la version prédéterminée Vx. La réception E103 de la requête, par l'unité centrale de commande U1 ou par l'unité de stockage externe ST, déclenche le téléchargement sur le terminal de communication T1 de cette interface IHM, dans sa version Vx en vigueur, ou des paramètres de configuration d'une interface déjà présente sur le terminal de communication T1, pour le contrôle et la communication avec l'unité centrale de commande U1 ;
- la réception E204 de l'application d'interface IHM selon la version Vx en vigueur, ou des paramètres de configuration d'une interface existante sur le terminal de communication T1. L'interface IHM, une fois installée ou configurée conformément auxdits paramètres, permet d'assurer un contrôle de l'unité centrale de commande U1 ou d'un dispositif domotique appartenant à l'installation domotique à partir du terminal de communication T1 via cette interface IHM, dans sa version Vx compatible avec la version du logiciel fonctionnel de l'unité centrale de commande U1.
- l'adaptation E205 de la configuration du terminal de communication T1, comprenant l'installation de l'application d'interface IHM sur le terminal de communication T1 et/ou le paramétrage de l'interface existante sur le terminal de communication T1, de sorte que l'application d'interface, après adaptation, soit configurée pour être compatible avec la version Vx d'un logiciel fonctionnel de l'unité centrale de commande U1.

Ainsi, grâce aux dispositions du procédé de configuration, la configuration du terminal T1 comprend non seulement l'application conteneur APPC constitutive de la configuration de base pour la découverte par le terminal T1 d'une unité centrale de commande U1 à portée de communication directe, mais également une application d'interface IHM configurée selon la version prédéterminée Vx du logiciel fonctionnel de l'unité centrale de commande U1. Cela permet au terminal de communication T1 de contrôler E206 et d'interagir avec l'unité centrale de commande U1, quelle que soit la version Vx du logiciel fonctionnel installé dans l'unité centrale de commande U1. Ainsi, l'application d'interface IHM, après la mise en œuvre dudit procédé de configuration, est compatible avec la version prédéterminée Vx de l'unité centrale de commande U1.

Grâce à ces dispositions, le terminal de communication T1 peut également prendre le contrôle du ou des dispositifs domotiques D qui sont rattachés à l'unité centrale de commande U1 au sein de l'installation domotique Su.

Le téléchargement de l'application d'interface, ou des paramètres de configuration d'une application d'interface existante sur le terminal peuvent ne pas être nécessaire à chaque démarrage de l'application conteneur. L'application d'interface ou les paramètres de configuration téléchargés une première fois par l'application conteneur APPC sur le terminal T1 peuvent être persistantes sur celui-ci, et n'avoir pas besoin d'être téléchargés à nouveau s'ils n'ont pas évolué sur l'unité centrale de commande U1 ou l'unité de stockage externe ST, depuis le dernier téléchargement.

Suivant un mode de mise en œuvre alternatif, l'application d'interface ou les paramètres de configuration téléchargés par l'application conteneur APPC sur le terminal de communication T1 peuvent être installés de manière non persistante sur le terminal de communication T1. Ainsi, par exemple, après chaque sortie de l'application, chaque réinitialisation ou chaque arrêt du terminal de communication, l'application d'interface devra être téléchargée. De façon avantageuse, ce mode de mise en œuvre permet un gain de place mémoire sur le terminal de communication T1.

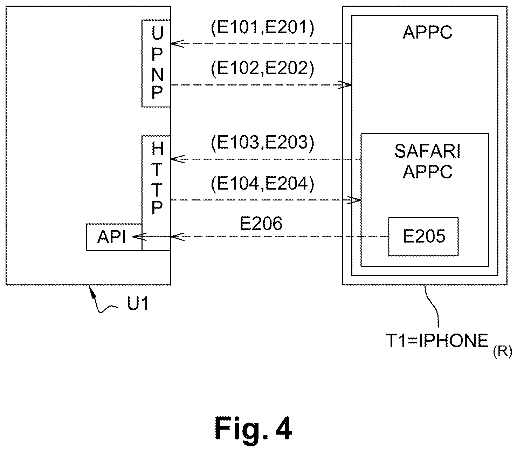

La figure 4 est une représentation d'un exemple de mise en œuvre du procédé selon l'invention lorsque le terminal T1 est un téléphone intelligent ou smartphone du type commercialisé sous la marque IPHONE. La mise en œuvre du procédé peut démarrer seulement si l'application conteneur APPC est présente sur le terminal T1 ; pour cela, on peut faire l'hypothèse, que le terminal T1 a pu disposer d'une connexion à internet via un fournisseur de service internet et a pu ainsi télécharger l'application conteneur via internet depuis une plateforme de téléchargement, en particulier depuis la plateforme APPSTORE (R), antérieurement à la mise en œuvre du procédé de communication.

Ensuite la mise en œuvre du procédé selon l'invention peut démarrer avec :
1. les étapes E201, E101, E102, E202 d'échanges de messages selon le premier protocole UPNP entre l'application conteneur APPC pour la découverte de l'unité centrale de commande U1, puis l'émission par l'unité centrale de commande U1 et la réception par le terminal d'une adresse de téléchargement de l'application d'interface IHM, ou des paramètres de configuration d'une application d'interface existante ;
2. les étapes E203, E103, E104, E204 d'échanges de messages selon le deuxième protocole HTTP entre une application de type SAFARI en mode conteneur SAFARI/APPC et l'unité centrale de commande U1 qui se concluent avec la réception par le terminal T1 de l'application d'interface IHM ou des paramètres de configuration ;
3. l'étape E205 d'installation, ou de configuration selon les paramètres de configuration, de l'application d'interface IHM sur le terminal T1 ;
4. l'étape de contrôle E206 de l'unité centrale de commande U1 par le terminal T1, via l'application d'interface IHM installée ou configurée.
Il est à noter que le procédé de configuration peut être mis en œuvre même si le terminal de communication T1 n'a pas accès à internet.

## Revendications

1. Procédé de configuration (200) d'un terminal de communication (T1) pour le contrôle d'une unité centrale de commande (U1) ou d'un dispositif domotique (D) appartenant à une installation domotique (Su), le procédé (200) étant mis en œuvre par le terminal de communication (T1), une configuration initiale du terminal de communication (T1) comprenant au moins une application conteneur (APPC), le procédé (200), mis en œuvre par le terminal de communication (T1), comprenant les étapes suivantes:
- réception (E204) d'une application d'interface (IHM) et/ou de données de paramétrage de ladite application d'interface, téléchargés depuis l'unité centrale de commande (U1) ou depuis une unité de stockage externe (ST);
- adaptation (E205) de la configuration du terminal de communication (T1), l'étape d'adaptation (E205) comprenant une installation de l'application d'interface (IHM) téléchargée sur le terminal de communication (T1) et/ou un paramétrage d'une application d'interface (IHM), présente sur le terminal de communication (T1) avant l'étape de réception (E204), afin de rendre l'application d'interface (IHM) compatible avec une version (Vx) prédéterminée d'un logiciel fonctionnel de l'unité centrale de commande (U1).

2. Procédé de configuration (200) selon la revendication 1, comprenant l'étape suivante :
- émission (E203) d'une requête de téléchargement de l'application d'interface (IHM) ;

3. Procédé de configuration (200) selon l'une quelconque des revendications précédentes, comprenant les étapes suivantes :
- émission (E201) d'un message de découverte ;
- réception (E202) d'un message d'identification contenant l'adresse de téléchargement d'une application d'interface (IHM);

4. Procédé de configuration (200) selon la revendication 3, dans lequel :
- l'étape d'émission (E201) du message de découverte, et
- l'étape de réception (E202) du message d'identification,
sont réalisées selon un premier protocole de communication (P1), et dans lequel l'étape de réception (E204) de l'application d'interface (IHM) est réalisée selon un deuxième protocole de communication (P2).

5. Procédé de configuration (200) selon la revendication 2, dans lequel l'étape d'émission (E203) de la requête de téléchargement est réalisée selon un deuxième protocole de communication (P2).

6. Procédé de contrôle d'une unité centrale de commande (U1) ou d'un dispositif domotique (D) appartenant à une installation domotique (Su) mis en œuvre par un terminal de communication (T1), une configuration initiale du terminal de communication (T1)comprenant au moins une application conteneur (APPC), l'unité centrale de commande (U1) comprenant une version (Vx) prédéterminée d'un logiciel fonctionnel et au moins un module de communication agencé pour communiquer avec l'application conteneur (APPC), le procédé comprenant les étapes suivantes :
- mise en œuvre du procédé (200) de configuration selon l'une des revendications précédentes ;
- envoi (E206) d'un message de contrôle à l'unité centrale de commande (U1) par l'intermédiaire de l'application d'interface (IHM) installée et/ou paramétrée, lors d'une étape d'adaptation (E205) du procédé de configuration (200).

7. Procédé de configuration (100) d'un terminal de communication (T1) pour le contrôle d'une unité centrale de commande (U1) ou d'un dispositif domotique (D) appartenant à une installation domotique (Su), une configuration initiale du terminal de communication (T1)comprenant au moins une application conteneur (APPC), le procédé (100) étant mis en œuvre par l'unité centrale de commande (U1), l'unité centrale de commande (U1) comprenant au moins un module de communication (4') agencé pour communiquer avec l'application conteneur (APPC), ainsi qu'un logiciel fonctionnel et une application d'interface (IHM) pour ledit logiciel fonctionnel, le procédé (100), mis en œuvre par l'unité centrale de commande (U1), comprenant l' étape suivante:
- téléchargement (E104), via le module de communication (4'), de l'application d'interface (IHM) et/ou de données de paramétrage de ladite application d'interface (IHM) sur le terminal de communication (T1).

8. Procédé de configuration (100) selon la revendication 7, comprenant une étape de :
- réception (E103), via le module de communication (4'), d'une requête de téléchargement, émise (E203) par le terminal de communication (T1).

9. Procédé de configuration (100) selon l'une quelconque des revendications 7 ou 8, comprenant les étapes suivantes :
- réception (E101) d'un message de découverte en provenance du terminal de communication (T1) ;
- émission (E102) d'un message d'identification contenant l'adresse de téléchargement d'une application d'interface (IHM), destiné au terminal de communication (T1);

10. Procédé de configuration (100) selon la revendication 9, dans lequel :
- l'étape de réception (E101) du message de découverte, et
- l'étape d'émission (E102) du message d'identification,
sont réalisées selon un premier protocole de communication (P1), et dans lequel l'étape de téléchargement (E104) de l'application d'interface (IHM) est réalisée selon un deuxième protocole de communication (P2).

11. Procédé de configuration (100) selon la revendication 8, dans lequel l'étape de réception (E103) de la requête de téléchargement est réalisée selon un deuxième protocole de communication (P2).

## Patentansprüche

1. Verfahren zum Konfigurieren (200) eines Kommunikationsendgeräts (T1) für die Steuerung einer zentralen Bedieneinheit (U1) oder einer Heimautomatisierungsvorrichtung (D), die zu einer Heimautomatisierungsanlage (Su) gehören, wobei das Verfahren (200) von dem Kommunikationsendgerät (T1) umgesetzt wird, wobei eine Ausgangskonfiguration des Kommunikationsendgeräts (T1) mindestens eine Containeranwendung (CAPP) umfasst, wobei das von dem Kommunikationsendgerät (T1) umgesetzte Verfahren (200) die folgenden Schritte umfasst:
- Empfangen (S204) einer Schnittstellenanwendung (HMI) und/oder von Parametrierungsdaten für die Schnittstellenanwendung, die von der zentralen Bedieneinheit (U1) oder von einer externen Speichereinheit (ST) heruntergeladen wurden;
- Anpassen (S205) der Konfiguration des Kommunikationsendgeräts (T1), wobei der Schritt des Anpassens (S205) ein Installieren der heruntergeladenen Schnittstellenanwendung (HMI) auf dem Kommunikationsendgerät (T1) und/oder ein Parametrieren einer vor dem Schritt des Empfangens (S204) auf dem Kommunikationsendgerät (T1) vorhandenen Schnittstellenanwendung (HMI) umfasst, um die Schnittstellenanwendung (HMI) mit einer vorbestimmten Version (Vx) einer Funktionssoftware der zentralen Bedieneinheit (U1) kompatibel zu machen.

2. Konfigurationsverfahren (200) nach Anspruch 1, das den folgenden Schritt umfasst:
- Senden (S203) einer Anforderung zum Herunterladen der Schnittstellenanwendung (HMI).

3. Konfigurationsverfahren (200) nach einem der vorstehenden Ansprüche, das die folgenden Schritte umfasst:
- Senden (S201) einer Erkennungsnachricht;
- Empfangen (S202) einer Identifizierungsnachricht, die die Adresse zum Herunterladen einer Schnittstellenanwendung (HMI) enthält.

4. Konfigurationsverfahren (200) nach Anspruch 3, wobei:
- der Schritt des Sendens (S201) der Erkennungsnachricht, und
- der Schritt des Empfangens (S202) der Identifizierungsnachricht
nach einem ersten Kommunikationsprotokoll (P1) ausgeführt werden, und wobei der Schritt des Empfangens (S204) der Schnittstellenanwendung (HMI) nach einem zweiten Kommunikationsprotokoll (P2) ausgeführt wird.

5. Konfigurationsverfahren (200) nach Anspruch 2, wobei der Schritt des Sendens (S203) der Herunterlade-Anforderung nach einem zweiten Kommunikationsprotokoll (P2) ausgeführt wird.

6. Verfahren zum Steuern einer zentralen Bedieneinheit (U1) oder einer Heimautomatisierungsvorrichtung (D), die zu einer Heimautomatisierungsanlage (Su) gehören, das von einem Kommunikationsendgerät (T1) umgesetzt wird, wobei eine Ausgangskonfiguration des Kommunikationsendgeräts (T1) mindestens eine Containeranwendung (CAPP) umfasst, wobei die zentrale Bedieneinheit (U1) eine vorbestimmte Version (Vx) einer Funktionssoftware und mindestens ein Kommunikationsmodul umfasst, das so eingerichtet ist, dass es mit der Containeranwendung (CAPP) kommuniziert, wobei das Verfahren die folgenden Schritte umfasst:
- Umsetzen des Konfigurationsverfahrens (200) nach einem der vorstehenden Ansprüche;
- Senden (S206), bei einem Schritt des Anpassens (S205) des Konfigurationsverfahrens (200), einer Steuerungsnachricht mittels der installierten und/oder parametrierten Schnittstellenanwendung (HMI) an die zentrale Bedieneinheit (U1).

7. Verfahren zum Konfigurieren (100) eines Kommunikationsendgeräts (T1) für die Steuerung einer zentralen Bedieneinheit (U1) oder einer Heimautomatisierungsvorrichtung (D), die zu einer Heimautomatisierungsanlage (Su) gehören, wobei eine Ausgangskonfiguration des Kommunikationsendgeräts (T1) mindestens eine Containeranwendung (CAPP) umfasst, wobei das Verfahren (100) von der zentralen Bedieneinheit (U1) umgesetzt wird, wobei die zentrale Bedieneinheit (U1) mindestens ein Kommunikationsmodul (4'), das so eingerichtet ist, dass es mit der Containeranwendung (CAPP) kommuniziert, sowie eine Funktionssoftware und eine Schnittstellenanwendung (HMI) für die Funktionssoftware umfasst, wobei das von der zentralen Bedieneinheit (U1) umgesetzte Verfahren (100) den folgenden Schritt umfasst:
- Herunterladen (S104) der Schnittstellenanwendung (HMI) und/oder von Parametrierungsdaten für die Schnittstellenanwendung (HMI) über das Kommunikationsmodul (4') auf das Kommunikationsendgerät (T1).

8. Konfigurationsverfahren (100) nach Anspruch 7, das einen Schritt umfasst des:
- Empfangens (S103) einer Herunterlade-Anforderung, die von dem Kommunikationsendgerät (T1) gesendet wurde (S203), über das Kommunikationsmodul (4').

9. Konfigurationsverfahren (100) nach einem der Ansprüche 7 oder 8, das die folgenden Schritte umfasst:
- Empfangen (S101) einer Erkennungsnachricht von dem Kommunikationsendgerät (T1);
- Senden (S102) einer Identifizierungsnachricht, die die Adresse zum Herunterladen einer Schnittstellenanwendung (HMI) enthält, an das Kommunikationsendgerät (T1).

10. Konfigurationsverfahren (100) nach Anspruch 9, wobei:
- der Schritt des Empfangens (S101) der Erkennungsnachricht, und
- der Schritt des Sendens (S102) der Identifizierungsnachricht
nach einem ersten Kommunikationsprotokoll (P1) ausgeführt werden, und wobei der Schritt des Herunterladens (S104) der Schnittstellenanwendung (HMI) nach einem zweiten Kommunikationsprotokoll (P2) ausgeführt wird.

11. Konfigurationsverfahren (100) nach Anspruch 8, wobei der Schritt des Empfangens (S103) der Herunterlade-Anforderung nach einem zweiten Kommunikationsprotokoll (P2) ausgeführt wird.

## Claims

1. A method of configuring (200) a communication terminal (T1) for controlling a central control unit (U1) or a home automation device (D) belonging to a home automation installation (Su), the method (200) being implemented by the communication terminal (T1), an initial configuration of the communication terminal (T1) comprising at least one container application (APPC), the method (200), implemented by the communication terminal (T1), comprising the following steps:
- reception (E204) of an interface application (IHM) and/or parameterization data from said interface application, downloaded from the central control unit (U1) or from an external storage unit (ST);
- adaptation (E205) of the configuration of the communication terminal (T1), the adaptation step (E205) comprising an installation of the interface application (IHM) downloaded onto the communication terminal (T1) and/or a parameterization of an interface application (IHM), present on the communication terminal (T1) before the reception step (E204), in order to make the interface application (IHM) compatible with a predetermined version (Vx) of a functional software of the central control unit (U1).

2. The configuration method (200) according to claim 1, comprising the following step:
- emission (E203) of a request for downloading the interface application (IHM);

3. The configuration method (200) according to any one of the preceding claims, comprising the following steps:
- emission (E201) of a discovery message;
- reception (E202) of an identification message containing the download address of an interface application (IHM);

4. The configuration method (200) according to claim 3, wherein:
- the step of emitting (E201) the discovery message, and
- the step of receiving (E202) the identification message,
are carried out according to a first communication protocol (P1), and wherein the step of receiving (E204) the interface application (IHM) is carried out according to a second communication protocol (P2).

5. The configuration method (200) according to claim 2, wherein the step of transmitting (E203) the download request is carried out according to a second communication protocol (P2).

6. A method for monitoring a central control unit (U1) or a home automation device (D) belonging to a home automation installation (Su) implemented by a communication terminal (T1), an initial configuration of the communication terminal (T1) comprising at least one container application (APPC), the central control unit (U1) comprising a predetermined version (Vx) of a functional software and at least one communication module arranged to communicate with the container application (APPC), the method comprising the following steps:
- implementation of the configuration method (200) according to any of the preceding claims;
- sending (E206) of a monitoring message to the central control unit (U1) through the interface application (IHM) installed and/or parameterized, during an adaptation step (E205) of the configuration method (200).

7. A method for configuring (100) a communication terminal (T1) for controlling a central control unit (U1) or a home automation device (D) belonging to a home automation installation (Su), an initial configuration of the communication terminal (T1) comprising at least one container application (APPC), the method (100) being implemented by the central control unit (U1), the central control unit (U1) comprising at least one communication module (4') arranged to communicate with the container application (APPC), as well as a functional software and an interface application (IHM) for said functional software, the method (100), implemented by the central control unit (U1), comprising the following step:
- download (E104), via the communication module (4'), of the interface application (IHM) and/or of the parameterization data of said interface application (IHM) on the communication terminal (T1).

8. The configuration method (100) according to claim 7, comprising a step of:
- reception (E103), via the communication module (4'), of a download request, emitted (E203) by the communication terminal (T1).

9. The configuration method (100) according to any one of claims 7 or 8, comprising the following steps:
- reception (E101) of a discovery message from the communication terminal (T1);
- emission (E102) of an identification message containing the download address of an interface application (IHM), to the communication terminal (T1);

10. The configuration method (100) according to claim 9, wherein:
- the step of receiving (E101) the discovery message, and
- the step of emitting (E102) the identification message,
are carried out according to a first communication protocol (P1), and wherein the step of downloading (E104) the interface application (IHM) is carried out according to a second communication protocol (P2).

11. The configuration method (100) according to claim 8, wherein the step of receiving (E103) the download request is carried out according to a second communication protocol (P2).
